# EUROPÄISCHE PATENTANMELDUNG

(11) **EP 1 748 213 A1**
(43) Veröffentlichungstag der Anmeldung: **31.01.2007**
(21) Anmeldenummer: 05016130.6
(22) Anmeldetag: 25.07.2005
(51) Int. Cl.: F16D 66/00, F16D 55/00

(54) **Scheibenbremse mit verbesserter Einrichtung zum Messen der wirkenden Normalkraft**

(71) Anmelder: SIEMENS AKTIENGESELLSCHAFT, 80333 München (DE)
(72) Erfinder: Baier-Welt, Christian, Dr., 64372 Ober-Ramstadt (DE)

(57) **Zusammenfassung**

Die Erfindung betrifft eine Scheibenbremse, insbesondere für Kraftfahrzeuge, mit einer drehbaren Bremsscheibe, einem die Bremsscheibe überspannenden Bremssattel (10), einem Aktuator zum Aufbringen einer Betätigungskraft sowie Reibbelägen, die mittels der Betätigungskraft an die Bremsscheibe anlegbar sind, und einer Einrichtung zum Messen der aktuellen Bremskraft. Um die Messung der aktuellen Bremskraft zuverlässiger und genauer zu machen, verwendet die Einrichtung zum Messen der aktuellen Bremskraft als Messgröße die elastische Aufweitung des Bremssattels (10) und umfasst ein Bauteil (24) mit einem ersten am Bremssattel (10) befestigten Ende (26) und einem zweiten, freien Ende (28), wobei zwischen dem Bremssattel (10) und dem Bauteil (24) längs seiner Erstreckung vom ersten (26) zum zweiten Ende (28) ein Spalt (30) gebildet ist, dessen aktuelle Spaltbreite (w) die Einrichtung zum Messen der aktuellen Bremskraft misst. Die Einrichtung zum Messen der aktuellen Bremskraft gibt ein Signal in Abhängigkeit der aktuell gemessenen Spaltbreite (w) aus.

## Beschreibung

Die vorliegende Erfindung betrifft eine Scheibenbremse, insbesondere für Kraftfahrzeuge, mit einer drehbaren Bremsscheibe, einem die Bremsscheibe überspannenden Bremssattel, einem Aktuator zum Aufbringen einer Betätigungskraft sowie Reibbelägen, die mittels der Betätigungskraft an die Bremsscheibe anlegbar sind, und mit einer Einrichtung zum Messen der aktuellen Bremskraft.

Scheibenbremsen der genannten Art sind dem Fachmann bekannt. Der Bremssattel kann dabei als Schwimmsattel oder als Festsattel ausgeführt sein. Als Aktuator dient bei hydraulisch betätigten Scheibenbremsen üblicherweise ein Kolben, der mittels Hydraulikdruck in Betätigungsrichtung verschiebbar ist. Handelt es sich um eine elektromechanisch betätigte Scheibenbremse, kommt ein elektromechanischer Aktuator zum Einsatz. Zwischen einem solchen elektromechanischen Aktuator und wenigstens einem Reibbelag kann eine Selbstverstärkungseinrichtung angeordnet sein, die die vom elektromechanischen Aktuator erzeugte Betätigungskraft bei einem Bremsvorgang selbsttätig und ohne Zufuhr von Fremdenergie verstärkt. Insbesondere bei einer Scheibenbremse mit elektromechanischem Aktuator und unabhängig von ihrem genauen konstruktiven Aufbau muss im Betrieb derselben die aktuelle Bremskraft ständig möglichst genau erfasst werden, um die Scheibenbremse zuverlässig und genau so regeln zu können, dass eine von einem Benutzer der Bremse vorgegebene Bremsanforderung eingehalten wird. Mit dem Begriff "aktuelle Bremskraft" ist hier die zwischen den Reibbelägen und der Bremsscheibe in einer Richtung normal zur Bremsscheibenoberfläche wirkende Kraft gemeint, die an der Scheibenbremse erzeugt wird, wenn die Reibbeläge sich zum Abbremsen in Kontakt mit der Bremsscheibe befinden.

Um die aktuelle Bremskraft zu ermitteln, wird üblicherweise die Verformung eines in den Kraftfluss der Bremse eingebrachten Sensorelements gemessen. Beispielsweise kann ein Dehnungsmessstreifen auf den Bremssattel aufgebracht sein, um dessen Verformung während eines Bremsvorgangs zu messen. Als Maß für die aktuelle Bremskraft wird häufig die auf die Reibbeläge wirkende Normalkraft verwendet, d.h. die normal zur Bremsscheibenoberfläche gerichtete Kraft, die die Reibbeläge an die Bremsscheibe anpresst. Jedoch ist die Genauigkeit der Kraftmessung bisher nur unzureichend, da die verwendeten Sensoren Hystereseeffekte zeigen und sich überdies ihr Ausgabesignal mit der Temperatur ändert. Letzteres ist deshalb kritisch, weil sich der Sensor in der Regel in der Nähe eines sich im Bremsbetrieb stark erhitzenden Reibbelages befindet. Integrierte Schaltkreise, insbesondere die in Sensoren häufig zum Einsatz kommenden ASICS, haben Probleme damit, den an der Bremse auftretenden hohen Temperaturen standzuhalten und laufen Gefahr, in ihnen gespeicherte Informationen zu verlieren. Bisher verwendete Sensorelemente, insbesondere Dehnungsmessstreifen, erreichen hinsichtlich prozesstechnischer Qualität und Lebensdauer nicht die Anforderungen, die im Automobilbereich gestellt werden.

Die Erfindung hat sich deshalb zum Ziel gesetzt, eine Scheibenbremse mit elektromechanischem Aktuator bereitzustellen, bei der die Messung der aktuellen Bremskraft genauer und zuverlässiger als bisher möglich ist.

Diese Aufgabe ist ausgehend von einer eingangs genannten, gattungsgemäßen Scheibenbremse erfindungsgemäß dadurch gelöst, dass die Einrichtung zum Messen der aktuellen Bremskraft als Messgröße die elastische Aufweitung des Bremssattels verwendet, dass die Einrichtung zum Messen der aktuellen Bremskraft ein Bauteil mit einem ersten am Bremssattel befestigten Ende und einem zweiten, freien Ende umfasst, wobei zwischen dem Bremssattel und dem Bauteil längs seiner Erstreckung vom ersten zum zweiten Ende ein Spalt gebildet ist, dessen aktuelle Spaltbreite die Einrichtung zum Messen der aktuellen Bremskraft misst, und dass die Einrichtung zum Messen der aktuellen Bremskraft ein Signal in Abhängigkeit der aktuellen gemessenen Spaltbreite ausgibt. Das genannte, mit seinem einen Ende am Bremssattel befestigte Bauteil ist insbesondere brückenförmig oder auskragend und befindet sich aufgrund seiner Ausbildung mit einem freien Ende nicht im Kraftfluss der Bremse. Das Bauteil kann einstückig mit dem Bremssattel ausgebildet sein, beispielsweise durch Fräsen eines einseitig offenen Spaltes in das Material des Bremssattels, es kann jedoch auch als separates Bauteil ausgebildet und auf geeignete Art und Weise mit dem Bremssattel verbunden sein. In jedem Fall zeigt, wenn der Bremssattel sich im Bremsbetrieb elastisch aufweitet, das Bauteil aufgrund seiner nicht im Kraftfluss des Bremssattels liegenden Anordnung keine Verformung. Es kommt deshalb zu einer Relativbewegung zwischen dem freien Ende des nicht kraftführenden Bauteils und dem Bremssattel, die zu einer Änderung der Spaltbreite führt.

Bei bevorzugten Ausführungsformen der erfindungsgemäßen Scheibenbremse weist die Einrichtung zum Messen der aktuellen Bremskraft eine Sensoreinrichtung auf, die die aktuelle Spaltbreite im Bereich des freien Endes des Bauteils misst. Die Sensoreinrichtung gibt in Abhängigkeit der Änderung der Spaltbreite ein Signal aus, welches repräsentativ für die aktuelle Bremskraft ist. Vorzugsweise arbeitet die Sensoreinrichtung nach einem elektromagnetischen Messprinzip, beispielsweise nach dem Induktivitätsmessprinzip. Wenn die Sensoreinrichtung nach dem Induktivitätsmessprinzip arbeitet, umfasst sie in einer bevorzugten Ausführungsform wenigstens eine Spule mit bewegtem ferromagnetischem Kern. Bei einer anderen bevorzugten Ausführungsform der Sensoreinrichtung arbeitet diese nach dem Wirbelstrommessprinzip. Noch andere Ausführungsformen arbeiten mit einem relativ zum Sensor bewegten Magneten und messen die Intensität oder die Richtung des Magnetfeldvektors. Bevorzugte Ausführungsformen verwenden hierzu Sensoren, die nach dem magnetoresistiven oder dem Hall-Prinzip arbeiten.

Bei einer noch anderen bevorzugten Ausführungsform der erfindungsgemäßen Scheibenbremse arbeitet die Sensoreinrichtung zum Messen der aktuellen Spaltbreite nach dem Reflexlichtschrankenprinzip. Dabei wird ein Lichtstrahl von einer Seite des Spalts quer über den Spalt ausgesandt, auf der anderen Spaltseite über den Spalt zurück reflektiert und dort von einem Empfänger erfasst, der die Intensität des reflektierten Lichts misst und daraus die Spaltbreite errechnet.

Bei einer nochmals anderen bevorzugten Ausführungsform einer erfindungsgemäßen Scheibenbremse mit einer Sensoreinrichtung zur Messung der aktuellen Spaltbreite misst diese Sensoreinrichtung die Ovalität und/oder Größe und/oder Position eines von einer Seite des Spaltes auf dessen andere Seite projizierten optischen Lichtkegels. Hierzu kann beispielsweise eine Anordnung verwendet werden, wie sie in CD-Spielern eingesetzt wird, um den Lichtstrahl einer Laserdiode auf die Informationsspur der CD zu fokussieren.

Vorzugsweise ermittelt bei allen Ausführungsformen der erfindungsgemäßen Scheibenbremse die Einrichtung zum Messen der aktuellen Bremskraft eine Ausgangsspaltbreite, um eine Nullpunktskalibrierung durchzuführen, wobei diese Messung der Ausgangsspaltbreite im so genannten gelüfteten Zustand der Reibbeläge erfolgt. Damit ist ein Zustand gemeint, in dem zwischen wenigstens einem Reibbelag und der Bremsscheibe ein Luftspalt existiert, d.h. die aktuelle Bremskraft ist in diesem Zustand gleich Null. Mittels einer solchen Nullpunktskalibrierung kann die Genauigkeit der Einrichtung zum Messen der aktuellen Bremskraft auf einfache Weise erhöht werden.

Umfasst die Einrichtung zum Messen der aktuellen Bremskraft eine Sensoreinrichtung, deren Nullpunkt sich in Abhängigkeit der Temperatur verschieben kann, werden gemäß einer bevorzugten Ausführungsform die Reibbeläge während einer länger andauernden Bremsung erneut in den gelüfteten Zustand versetzt und es erfolgt anschließend eine weitere Nullpunktskalibrierung durch eine Messung der Ausgangsspaltbreite, um eine thermisch bedingte Nullpunktsdrift der Sensoreinrichtung auszugleichen. Je nach Dauer der Bremsung kann das Versetzen der Reibbeläge in den gelüfteten Zustand wiederholt erfolgen. Bei einem Fahrzeug mit mehreren Rädern wird dieses Versetzen in den gelüfteten Zustand sequenziell durchgeführt, damit eine vom Fahrer angeforderte Bremskraft nach wie vor aufrechterhalten werden kann. In kritischen Fahrzuständen, die beispielsweise das Eingreifen eines Fahrzeugstabilitätskontrollsystems oder eines Antiblockiersystems erfordern, unterbleibt diese erneute Nullpunktskalibrierung selbstverständlich.

Gemäß einer anderen bevorzugten Ausführungsform der erfindungsgemäßen Scheibenbremse wird zur Kompensation einer auf thermische Einflüsse zurückzuführenden Nullpunktsdrift die Temperatur des Bremssattels an einer oder mehreren Stellen erfasst, es wird sodann auf der Basis dieser Temperaturinformation die thermisch bedingte Dehnung des Bremssattels ermittelt und anschließend ein aktuell gemessener Wert der Spaltbreite, der aufgrund der ermittelten Bremssatteldehnung durch eine auf thermische Einflüsse zurückzuführenden Nullpunktsdrift beeinflusst ist, entsprechend korrigiert.

Gemäß einer noch anderen bevorzugten Ausführungsform der erfindungsgemäßen Scheibenbremse wird zur Kompensation einer auf thermische Einflüsse zurückzuführenden Nullpunktsdrift die Temperatur des Bremssattels basierend auf einem Energie- und Temperaturmodell des Bremssattels berechnet, sodann wird anhand der berechneten Bremssatteltemperatur die thermisch bedingte Dehnung des Bremssattels ermittelt und anschließend wird ein aktuell gemessener Wert der Spaltbreite, der aufgrund der ermittelten Bremssatteldehnung durch eine auf thermische Einflüsse zurückzuführende Nullpunktdrift beeinflusst ist, entsprechend korrigiert.

Bei den beiden zuvor beschriebenen Vorgehensweisen zur Kompensation einer etwaigen Nullpunktsdrift kann die thermisch bedingte Dehnung des Bremssattels auf der Basis der materialbedingten thermischen Ausdehnungskoeffizienten rechnerisch ermittelt werden, sie kann jedoch auch anhand einer Tabelle ermittelt werden, die bereits Werte für die Bremssatteldehnung in Abhängigkeit der Temperatur enthält.

Zur Kompensation thermisch bedingter Linearitätsabweichungen eines Sensors der Sensoreinrichtung wird die aktuelle Temperatur dieses Sensors gemessen und mittels eines individuellen Temperaturkoeffizienten wird die sich aus der gemessenen Temperatur ergebende Linearitätsabweichung des Sensors kompensiert.

Bei bevorzugten Ausführungsformen der erfindungsgemäßen Scheibenbremse ist die Einrichtung zum Messen der aktuellen Bremskraft mittels einer Messwerttabelle kalibriert, die von einem Kalibrierungs-Referenzsensor in Abhängigkeit der Bremskraft aufgenommene Bremssattel-Aufweitungswerte enthält. Eine solche Tabelle kann beispielsweise am Ende einer Produktionslinie der Scheibenbremse erzeugt werden, indem jede einzelne produzierte Bremse in einer Kalibrierungsstation einer Reihe von Betätigungsvorgängen mit unterschiedlichen Betätigungskräften unterzogen wird und die vom Kalibrierungs-Referenzsensor erfassten Bremssattel-Aufweitungswerte gespeichert und nach Abschluss des Kalibrierungsvorgangs in einem geeigneten elektronischen Bauteil der Bremse abgespeichert werden. Auf diese Weise können Nichtlinearitäten des Sensorsystems durch eine tabellengeführte Auswertung im Rahmen der Signalverarbeitung kompensiert werden, was die Genauigkeit der Messung weiter erhöht.

Ein bevorzugtes Ausführungsbeispiel der Erfindung wird im Folgenden anhand der beigefügten, schematischen Figuren näher erläutert. Es zeigt:
- Figur 1: einen Bremssattel einer Scheibenbremse mit elektromechanischem Aktuator in räumlicher Darstellung von unten, und

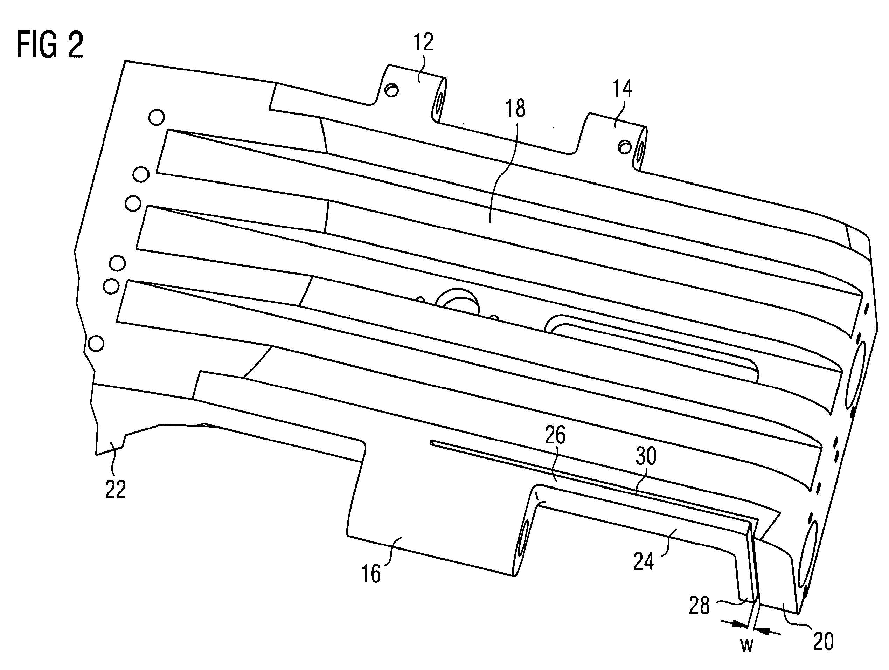

- Figur 2: den Bremssattel aus Figur 1 in räumlicher Ansicht von oben.

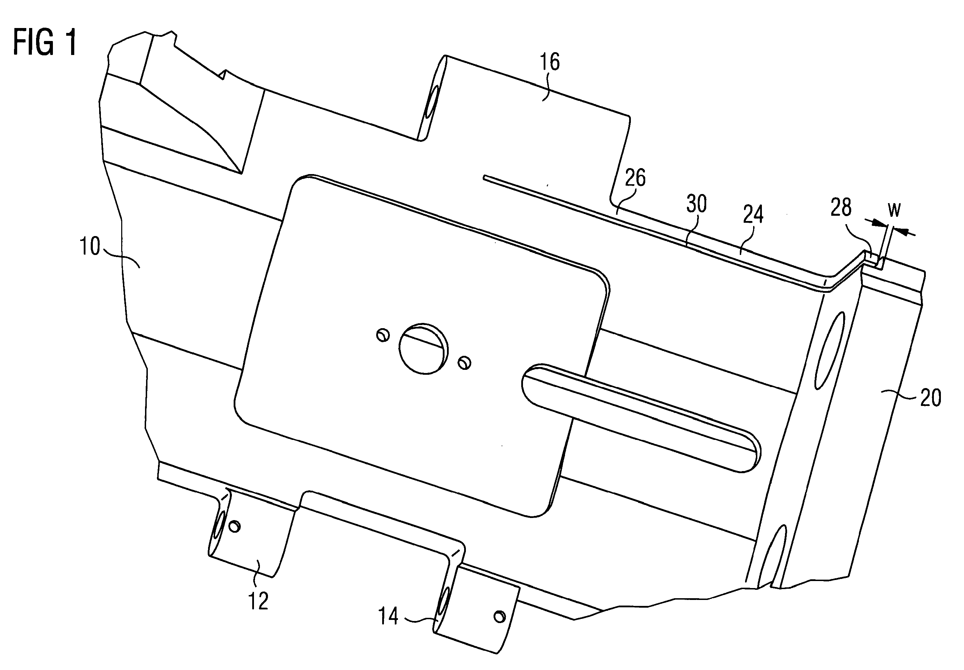

In Figur 1 ist ein Bremssattel 10 einer ansonsten nicht weiter gezeigten Scheibenbremse für ein Kraftfahrzeug dargestellt, die eine drehbare Bremsscheibe, den die Bremsscheibe überspannenden Bremssattel 10, einen elektromechanischen Aktuator zum Aufbringen einer Betätigungskraft sowie Reibbeläge aufweist, die mittels der Betätigungskraft an die Bremsscheibe anlegbar sind. Der dargestellte Bremssattel 10 ist als Schwimmsattel ausgebildet und weist auf seiner einen Seite Führungen 12, 14 und auf seiner gegenüberliegenden Seite eine weitere Führung 16 auf, mittels derer er auf nicht dargestellten Gleitbolzen verschiebbar gelagert werden kann.

Der Bremssattel 10 hat eine wie dargestellt insgesamt U-förmige Gestalt mit einer die nicht gezeigte Bremsscheibe überspannenden Brücke 18 sowie sich rechtwinklig davon in gleicher Richtung erstreckenden Armen 20 und 22, die im gezeigten Ausführungsbeispiel einstückig mit der Brücke 18 verbunden sind.

Die Scheibenbremse umfasst ferner eine Einrichtung, mit der die aktuelle Bremskraft gemessen werden kann. Diese Einrichtung verwendet als Messgröße die im Bremsbetrieb auftretende elastische Aufweitung des Bremssattels 10. Um diese elastische Bremssattelaufweitung genau und zuverlässig messen zu können, ist am Bremssattel 10 ein hier L-förmiges, armartiges Bauteil 24 vorhanden, welches mit einem ersten Ende 26 am Bremssattel 10 befestigt ist und welches ein zweites, freies Ende 28 aufweist. Zwischen dem ersten Ende 26 und dem zweiten Ende 28 des Bauteils 24 und dem angrenzenden Bremssattel 10 verläuft ein Spalt 30 mit einer Spaltbreite w. Im gezeigten Ausführungsbeispiel ist das Bauteil 24 einstückig mit dem Bremssattel 10 ausgebildet, indem der Spalt 30 in das Bremssattelmaterial eingeschnitten wird, beispielsweise mittels eines Lasers oder durch eine Trennwand im Gusswerkzeug, welches zur Herstellung des Bremssattels verwendet wird.

Aufgrund der Tatsache, dass das Bauteil 24 ein freies Ende besitzt, nimmt es nicht an der Übertragung von Kräften teil, die bei betätigter Bremse im Bremssattel 10 auftreten und diesen elastisch verformen. Bei betätigter Bremse wird sich deshalb in Abhängigkeit der aufgebrachten Bremskraft der Abstand verändern, den die beiden Arme 20, 22 voneinander haben. Dieses Phänomen wird als Bremssattelaufweitung bezeichnet. Weil das armartige Bauteil 24 durch sein freies Ende und den Spalt 30 kraftfrei gestellt ist, nimmt es an dieser Bremssattelaufweitung nicht teil. Dies führt dazu, dass die Breite w des Spalts 30 sich im Bereich des kurzen Schenkels des L-förmigen Bauteils 24 in Abhängigkeit der aufgebrachten Bremskraft ändert. Diese Änderung Δw der Spaltbreite w wird von einem in unmittelbarer Nähe dieses Teils des Spalts 30 angebrachten Sensor gemessen. Der nicht dargestellte Sensor erzeugt dabei ein Signal, welches letztlich repräsentativ für die aufgebrachte Bremskraft ist. Als Sensor ist jeder die Spaltbreitenänderung zuverlässig und genau erfassende Sensor geeignet.

Zur Nullpunktskalibrierung wird im unbelasteten Zustand des Bremssattels 10 die Anfangs- oder Ausgangspaltbreite w₀ gemessen. Das vom Sensor bei dieser Messung erzeugte Signal wird in einer der Bremse zugehörigen Signalverarbeitung als Kraft-Nullpunkt abgespeichert.

## Patentansprüche

1. Scheibenbremse, insbesondere für Kraftfahrzeuge, mit einer drehbaren Bremsscheibe, einem die Bremsscheibe überspannenden Bremssattel (10), einem Aktuator zum Aufbringen einer Betätigungskraft sowie Reibbelägen, die mittels der Betätigungskraft an die Bremsscheibe anlegbar sind, und einer Einrichtung zum Messen der aktuellen Bremskraft,
**dadurch gekennzeichnet, dass**
- die Einrichtung zum Messen der aktuellen Bremskraft als Messgröße die elastische Aufweitung des Bremssattels (10) verwendet, und
- die Einrichtung zum Messen der aktuellen Bremskraft ein Bauteil (24) mit einem ersten am Bremssattel (10) befestigten Ende (26) und einem zweiten, freien Ende (28) umfasst, wobei zwischen dem Bremssattel (10) und dem Bauteil (24) längs seiner Erstreckung vom ersten (26) zum zweiten Ende (28) ein Spalt (30) gebildet ist, dessen aktuelle Spaltbreite (w) die Einrichtung zum Messen der aktuellen Bremskraft misst, und dass
- die Einrichtung zum Messen der aktuellen Bremskraft ein Signal in Abhängigkeit der aktuell gemessenen Spaltbreite (w) ausgibt.

2. Scheibenbremse nach Anspruch 1,
**dadurch gekennzeichnet, dass** das Bauteil (24) einstückig mit dem Bremssattel (10) ausgebildet ist.

3. Scheibenbremse nach Anspruch 1 oder 2,
**dadurch gekennzeichnet, dass** die Einrichtung zum Messen der aktuellen Bremskraft eine Sensoreinrichtung aufweist, die die aktuelle Spaltbreite (w) im Bereich des freien Endes des Bauteils (24) misst.

4. Scheibenbremse nach Anspruch 3,
**dadurch gekennzeichnet, dass** die Sensoreinrichtung nach einem elektromagnetischen Messprinzip arbeitet.

5. Scheibenbremse nach Anspruch 4,
**dadurch gekennzeichnet, dass** die Sensoreinrichtung nach dem Induktivitätsmessprinzip arbeitet.

6. Scheibenbremse nach Anspruch 5,
**dadurch gekennzeichnet, dass** die Sensoreinrichtung eine Spule mit bewegtem ferromagnetischem Kern umfasst.

7. Scheibenbremse nach Anspruch 5,
**dadurch gekennzeichnet, dass** die Sensoreinrichtung nach dem Wirbelstrommessprinzip arbeitet.

8. Scheibenbremse nach Anspruch 3,
**dadurch gekennzeichnet, dass** die Sensoreinrichtung nach dem Reflexlichtschrankenprinzip arbeitet.

9. Scheibenbremse nach Anspruch 3,
**dadurch gekennzeichnet, dass** die Sensoreinrichtung die Ovalität und/oder Größe und/oder Position eines von einer Seite des Spaltes auf dessen andere Seite projizierten optischen Lichtkegels misst.

10. Scheibenbremse nach einem der vorhergehenden Ansprüche,
**dadurch gekennzeichnet, dass** die Einrichtung zum Messen der aktuellen Bremskraft eine Ausgangsspaltbreite (wo) ermittelt, um eine Nullpunktskalibrierung durchzuführen, und dass die Messung der Ausgangsspaltbreite (wo) im gelüfteten Zustand der Reibbeläge erfolgt.

11. Scheibenbremse nach Anspruch 10 in Verbindung mit einem der Ansprüche 3 bis 9,
**dadurch gekennzeichnet, dass** während einer länger andauernden Bremsung die Reibbeläge erneut in den gelüfteten Zustand versetzt werden und anschließend eine weitere Nullpunktskalibrierung durch Messung der Ausgangsspaltbreite (wo) erfolgt, um eine thermische bedingte Nullpunktsdrift der Sensoreinrichtung auszugleichen.

12. Scheibenbremse nach Anspruch 10,
**dadurch gekennzeichnet, dass** die Einrichtung zum Messen der aktuellen Bremskraft die Temperatur des Bremssattels (10) an einer oder mehreren Stellen erfasst, auf der Basis dieser Temperaturinformation die thermisch bedingte Dehnung des Bremssattels (10) ermittelt und anschließend einen aktuell gemessenen Wert der Spaltbreite (w), der aufgrund der ermittelten Bremssatteldehnung durch eine auf thermische Einflüsse zurückzuführende Nullpunktsdrift beeinflusst ist, entsprechend korrigiert.

13. Scheibenbremse nach Anspruch 10,
**dadurch gekennzeichnet, dass** die Einrichtung zum Messen der aktuellen Bremskraft die Temperatur des Bremssattels (10) basierend auf einem Energie- und Temperaturmodell des Bremssattels (10) berechnet, anhand der berechneten Bremssatteltemperatur die thermisch bedingte Dehnung des Bremssattels (10) ermittelt und anschließend einen aktuell gemessenen Wert der Spaltbreite (w), der aufgrund der ermittelten Bremssatteldehnung durch eine auf thermische Einflüsse zurückzuführende Nullpunktsdrift beeinflusst ist, entsprechend korrigiert.

14. Scheibenbremse nach Anspruch 12 oder 13,
**dadurch gekennzeichnet, dass** die thermisch bedingte Dehnung des Bremssattels (10) auf der Basis der materialbedingten thermischen Ausdehnungskoeffizienten rechnerisch ermittelt wird.

15. Scheibenbremse nach Anspruch 12 oder 13,
**dadurch gekennzeichnet, dass** die thermisch bedingte Dehnung des Bremssattels (10) anhand einer Tabelle ermittelt wird, die Werte für die Bremssatteldehnung in Abhängigkeit der Temperatur enthält.

16. Scheibenbremse nach einem der Ansprüche 3 bis 9,
**dadurch gekennzeichnet, dass** die aktuelle Temperatur eines Sensors der Sensoreinrichtung gemessen und mittels eines individuellen Temperaturkoeffizienten eine thermisch bedingte Linearitätsabweichung des Sensors kompensiert wird.

17. Scheibenbremse nach einem der vorhergehenden Ansprüche,
**dadurch gekennzeichnet, dass** die Einrichtung zum Messen der aktuellen Bremskraft mittels einer Messwerttabelle kalibriert ist, die von einem Kalibrierungs-Referenzsensor in Abhängigkeit der Bremskraft aufgenommene Bremssattel-Aufweitungswerte enthält.

18. Scheibenbremse nach einem der vorhergehenden Ansprüche,
**dadurch gekennzeichnet, dass** der Aktuator ein elektromechanischer Aktuator ist.
